# EUROPEAN PATENT APPLICATION

(11) **EP 4 653 722 A1**
(43) Date of publication of application: **26.11.2025**
(21) Application number: 25176145.8
(22) Date of filing: 13.05.2025
(51) Int. Cl.: F16F 15/02, F16F 15/00, B23Q 11/00, B23Q 3/06

(54) **HARMONICS DISRUPTOR**

(30) Priority: 23.05.2024 US 202418672203
(71) Applicant: RTX Corporation, Farmington, CT 06032 (US)
(72) Inventor: Burns, Sean A, Wallingford, 06492 (US)
(74) Representative: Schmitt-Nilson Schraud Waibel Wohlfrom Patentanwälte Partnerschaft mbB

(57) **Abstract**

A harmonic disruptor including a housing having an exterior; an attachment device attached to the housing exterior; a display attached to the housing exterior; and electronics withing the housing, the electronics configured to generate a vibration configured to dampen a component vibration.

## Description

The present disclosure is directed to the improved machining harmonics disruptor.

All objects have a natural frequency that they resonate or vibrate when struck. An everyday example of this is a tuning fork. The sound that a particular fork makes is directly related to the frequency that it is vibrating. The natural frequency of the object is dictated by the size, shape and material of the object.

When using various size end-mills to machine thin-wall components, there are harmonic points which can cause part damage, cutter damage, poor surface finish, increased cycle times (due to dialed back parameters), etc. The contact of the end-mill with the surface of the component can excite the component to vibrate. These vibrations can become significant enough to impact the end-mill to surface contact that causes chatter and pre-mature tool-wear. Resultant surface damage can result from the end-mill to surface contact being influenced by the resonating component. These vibration harmonics can often overlap with optimal machining parameters, forcing the manufacturing engineer/programmer to use sub-optimal machining parameters.

In accordance with the present disclosure, there is provided a harmonic disruptor comprising a housing having an exterior; an attachment device attached to the housing exterior; a display attached to the housing exterior; and electronics withing the housing, the electronics configured to generate a vibration configured to dampen a component vibration.

Particular embodiments further may include at least one, or a plurality of, the following optional features, alone or in combination with each other:

A further embodiment of any of the foregoing embodiments may additionally and/or alternatively include the attachment device comprises a clamp with a pair of arms and tensioner configured to adjust the pair of arms.

A further embodiment of any of the foregoing embodiments may additionally and/or alternatively include the attachment device is selected from the group consisting of magnets, adhesives, hooks, barbs, slots, channels and the like.

A further embodiment of any of the foregoing embodiments may additionally and/or alternatively include the attachment device is configured to translate vibration from the electronics to the component.

A further embodiment of any of the foregoing embodiments may additionally and/or alternatively include the display is configured visible from outside of the housing; the display configured to provide visual information that supports an operation of the harmonic disruptor.

A further embodiment of any of the foregoing embodiments may additionally and/or alternatively include the electronics comprises a controller in operative communication with a primary frequency amplifier and a secondary backup frequency harmonizer.

A further embodiment of any of the foregoing embodiments may additionally and/or alternatively include the frequency amplifier is configured to generate vibration energy for the harmonic disruptor; and the backup frequency harmonizer being utilized to supplement the harmonic disruptor.

In accordance with the present disclosure, there is provided a harmonic disruptor for a component comprising a component surface; a housing having a housing exterior; an attachment device attached to the housing exterior, the attachment device configured to attach with the component surface; a display attached to the housing exterior; and electronics within the housing, the electronics configured to generate a vibration configured to dampen component vibration.

Particular embodiments further may include at least one, or a plurality of, the following optional features, alone or in combination with each other:

A further embodiment of any of the foregoing embodiments may additionally and/or alternatively include the attachment device comprises a clamp with a pair of arms and tensioner configured to adjust the pair of arms.

A further embodiment of any of the foregoing embodiments may additionally and/or alternatively include the attachment device is selected from the group consisting of magnets, adhesives, hooks, barbs, slots, channels and the like.

A further embodiment of any of the foregoing embodiments may additionally and/or alternatively include the attachment device is configured to translate vibration from the electronics to the component.

A further embodiment of any of the foregoing embodiments may additionally and/or alternatively include the display is configured visible from outside of the housing; the display configured to provide visual information that supports an operation of the harmonic disruptor.

A further embodiment of any of the foregoing embodiments may additionally and/or alternatively include the electronics comprises a controller in operative communication with a primary frequency amplifier and a secondary backup frequency harmonizer.

In accordance with the present disclosure, there is provided a process for harmonic disruptor for dampening a component comprising providing a component surface; attaching a housing to the component surface, the housing having a housing exterior; an attachment device attached to the housing exterior; configuring the attachment device to attach with the component surface; attaching a display to the housing exterior; and locating electronics within the housing; and configuring the electronics to generate a vibration configured to dampen component vibration.

Particular embodiments further may include at least one, or a plurality of, the following optional features, alone or in combination with each other:

A further embodiment of any of the foregoing embodiments may additionally and/or alternatively include the attachment device comprises a clamp with a pair of arms and tensioner configured to adjust the pair of arms.

A further embodiment of any of the foregoing embodiments may additionally and/or alternatively include the process further comprising configuring the attachment device is to translate vibration from the electronics to the component.

A further embodiment of any of the foregoing embodiments may additionally and/or alternatively include the process further comprising configuring the display to be visible from outside of the housing; and configuring the display to provide visual information that supports an operation of the harmonic disruptor.

A further embodiment of any of the foregoing embodiments may additionally and/or alternatively include the electronics comprises a controller in operative communication with a primary frequency amplifier and a secondary backup frequency harmonizer.

A further embodiment of any of the foregoing embodiments may additionally and/or alternatively include the process further comprising configuring the frequency amplifier to generate vibration energy for the harmonic disruptor; and utilizing the backup frequency harmonizer to supplement the harmonic disruptor.

A further embodiment of any of the foregoing embodiments may additionally and/or alternatively include the process further comprising locating the harmonic disruptor on the component in a strategic dampening section configured to provide a dampening function for predetermined frequency of vibration being targeted.

Other details of the harmonic disruptor are set forth in the following detailed description and the accompanying drawings wherein like reference numerals depict like elements.
Fig. 1 is a schematic representation of an exemplary component with harmonic disruptors attached.
Fig. 2 is an isometric view schematic representation of an exemplary harmonic disruptor.
Fig. 3 is a top view schematic representation of the exemplary harmonic disruptor.
Fig. 4 is a side view schematic representation of the exemplary harmonic disruptor.
Fig. 5 is a cross section cut view schematic representation of the exemplary harmonic disruptor of Fig. 4.
Fig. 6 is a front view schematic representation of the exemplary harmonic disruptor.

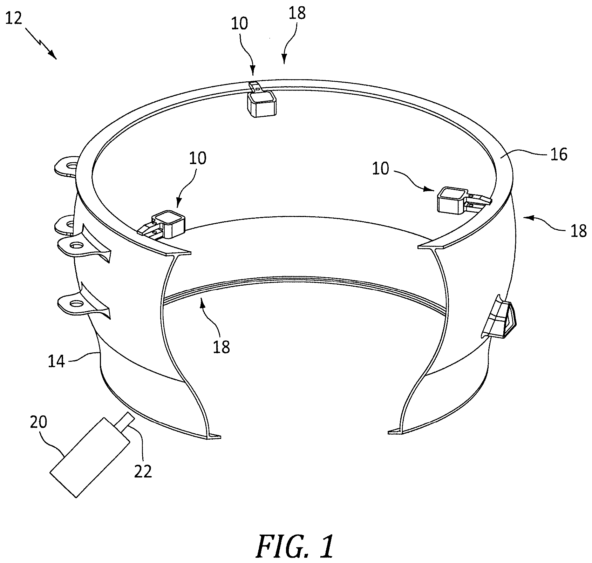

Referring now to Fig. 1 through Fig. 6, the exemplary harmonic disruptor 10 is shown. Three harmonic disruptors 10 are shown attached to a component 12 in Fig. 1. The component 12 shown is a thin-wall case with outboard milling features that are not rigid without relying on dampers or complex fixtures. The component 12 can be any component that requires machining steps that can create vibration that can resonate within the component 12. Particularly, surface processes that include machining at a surface 14 can create vibration that can be translated into the component 12 and excite the component 12.

The exemplary harmonic disruptors 10 are shown attached to a flange 16 of the component 12. The harmonic disruptor 10 can be located strategically on the component 12 in a strategic dampening section(s) 18 that can provide the optimal dampening function for the particular frequency of vibration being targeted.

To help determine the frequency and the strategic dampening section 18, a tap test can be performed on the component 12 prior to machining the component 12. The tap test includes contacting the component with a device that can cause vibration to occur throughout the component 12. This could be similar to ringing a bell with a bell clapper. The tap test measures the vibrations at various locations along the component 12 and creates data. The data collected from the tap test helps to determine harmonic hot-spots in the cutting machine 20, the component 12, and the cutting tool 22. The harmonic disruptor 10 can be attached to the machining spindle 20 to upset the machining harmonics in the cutting tool 22. The harmonic disruptor 10 can also employ a variable frequency that automatically adjusts between two pre-determined frequencies. The harmonic disruptor 10 can isolate frequency to the intended part of the manufacturing process (only part, or only machine where it is beneficial). This allows for more control between what is being harmonized.

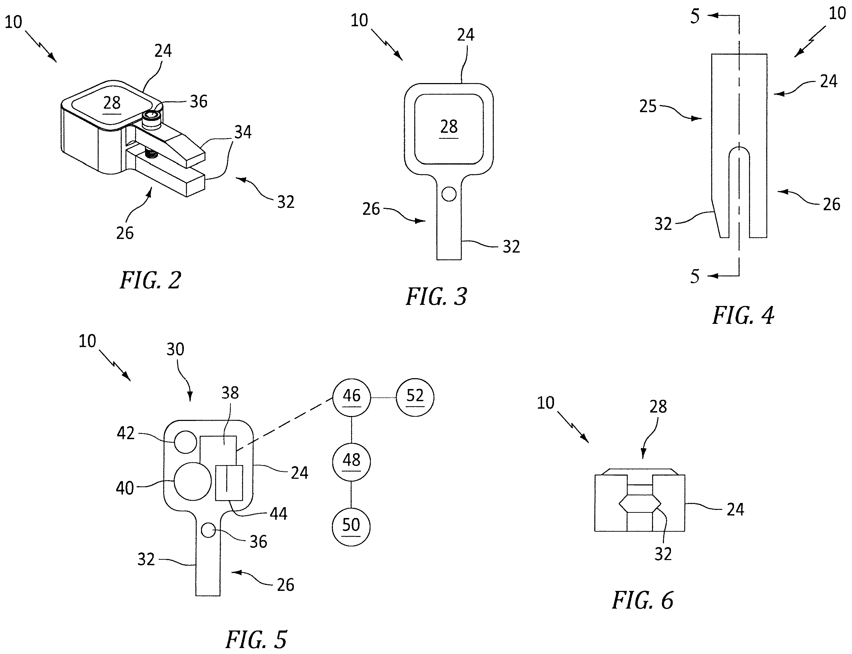

Referring also to Fig. 2 through Fig. 6, the harmonic disruptor 10 is shown from multiple views. The harmonic disruptor 10 can include a housing 24 having an exterior 25. The housing 24 can include an attachment device 26 proximate the exterior 25. The housing 24 can also include a display 28 proximate the exterior 25. Contained within the housing 24 can be the electronics 30 that function to sense and create the vibration required to dampen the unwanted component 12 vibration.

The attachment device 26 is shown as a clamp 32 with a pair of arms 34 and tensioner 36. The tensioner 36 can be adjusted to move the arms 34 of the clamp 32 for grasping parts of the component 12, such as the flange 16 shown at Fig. 1. It is contemplated that the attachment device 26 can include magnets, adhesives, hooks, barbs, slots, channels and the like configured to make a firm contact with the component 12. The attachment device 26 is configured to translate vibration from the electronics 30 to the component 12.

The display 28 is visible from outside of the housing 24. The display 28 can provide visual information that supports the operation of the harmonic disruptor 10. In an exemplary embodiment, the display can indicate set points, such as excessive vibration, low battery, harmonic synchronous/match, positive connectivity with the machine controller, lost signal, abnormal condition and the like. The display 28 can provide the ability to halt the machine 20 if an abnormal condition exists.

Referring also to Fig. 5, to see details of the electronics 30 within the housing 24. The electronics 30 can include but are not limited to a controller 38 in operative communication with a primary frequency amplifier 40. The frequency amplifier 40 can be configured to generate the required vibration energy from the harmonic disruptor 10. The controller 38 can also be in operative communication with a secondary backup frequency harmonizer 42. The backup frequency harmonizer 42 can be utilized to support the harmonic disruptor 10. A power supply 44 can be in operative communication with all of the electronics 30.

The controller 38 may include hardware, firmware, and/or software components that are configured to perform the functions disclosed herein, including the functions of the harmonic disruptor 10. While not specifically shown, the controller 38 may include other computing devices (e.g., servers, mobile computing devices, etc.) and computer aided manufacturer (CAM) systems which may be in communication with each other and/or the controller 38 via a communication network 46 to perform one or more of the disclosed functions. The controller 38 may include at least one processor 48 (e.g., a controller, microprocessor, microcontroller, digital signal processor, etc.), memory 50, and an input/output (I/O) subsystem 52. The controller 38 may be embodied as any type of computing device e.g., a server, an enterprise computer system, a network of computers, a combination of computers and other electronic devices, or other electronic devices. Although not specifically shown, the I/O subsystem 52 typically includes, for example, an I/O controller, a memory controller, and one or more I/O ports. The processor 48 and the I/O subsystem 52 are communicatively coupled to the memory 50. The memory 50 may be embodied as any type of computer memory device (e.g., volatile memory such as various forms of random access memory).

During a machining operation with the cutting machine 20 it is possible for a segment of the component 12 where machining parameters harmonize with the component 12 geometry and cause chatter and pre-mature tool-wear. However, with testing data, the harmonic disruptor 10 is configured to disrupt the harmonization by intentionally exciting the component 12 to avoid the surface defect.

A technical advantage of the disclosed harmonic disruptor includes the capacity for manufacturing engineers to optimize machining parameters for improved cutter life, faster cycle-times where relevant.

Another technical advantage of the disclosed harmonic disruptor includes the capacity for manufacturing engineers to optimize machining parameters for improved surface finish on multiple sections of the part which may require differing optimal frequencies.

Another technical advantage of the disclosed harmonic disruptor includes allowing manufacturing engineers to optimize machining parameters for passing metallurgy.

Another technical advantage of the disclosed harmonic disruptor includes the capacity for manufacturing engineers to optimize machining parameters for faster cycle-times where relevant.

There has been provided a harmonic disruptor. While the harmonic disruptor has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A harmonic disruptor comprising:
a housing having an exterior;
an attachment device attached to the housing exterior;
a display attached to the housing exterior; and
electronics withing the housing, the electronics configured to generate a vibration configured to dampen a component vibration.

2. The harmonic disruptor according to claim 1, wherein the attachment device comprises a clamp with a pair of arms and tensioner configured to adjust the pair of arms.

3. The harmonic disruptor according to claim 1 or 2, wherein the attachment device is selected from the group consisting of magnets, adhesives, hooks, barbs, slots, channels and the like.

4. The harmonic disruptor according to any of claims 1 to 3, wherein the attachment device is configured to translate vibration from the electronics to the component.

5. The harmonic disruptor according to any of claims 1 to 4, wherein the display is configured visible from outside of the housing; the display configured to provide visual information that supports an operation of the harmonic disruptor.

6. The harmonic disruptor according to any of claims 1 to 5, wherein the electronics comprises a controller in operative communication with a primary frequency amplifier and a secondary backup frequency harmonizer.

7. The harmonic disruptor according to claim 6, wherein the frequency amplifier is configured to generate vibration energy for the harmonic disruptor; and
the backup frequency harmonizer being utilized to supplement the harmonic disruptor.

8. The harmonic disruptor according to any of claims 1 to 7, wherein:
the harmonic disruptor is for a component comprising a component surface; and
the attachment device is configured to attach with the component surface.

9. A process for harmonic disruptor for dampening a component comprising:
providing a component surface;
attaching a housing to the component surface, the housing having a housing exterior;
an attachment device attached to the housing exterior;
configuring the attachment device to attach with the component surface;
attaching a display to the housing exterior; and
locating electronics within the housing; and
configuring the electronics to generate a vibration configured to dampen component vibration.

10. The process of claim 9, wherein the attachment device comprises a clamp with a pair of arms and tensioner configured to adjust the pair of arms.

11. The process of claim 9 or 10, further comprising:
configuring the attachment device is to translate vibration from the electronics to the component.

12. The process of any of claims 9 to 11, further comprising:
configuring the display to be visible from outside of the housing; and
configuring the display to provide visual information that supports an operation of the harmonic disruptor.

13. The process of any of claims 9 to 12, wherein the electronics comprises a controller in operative communication with a primary frequency amplifier and a secondary backup frequency harmonizer.

14. The process of claim 13, further comprising:
configuring the frequency amplifier to generate vibration energy for the harmonic disruptor; and
utilizing the backup frequency harmonizer to supplement the harmonic disruptor.

15. The process of any of claims 9 to 14, further comprising:
locating the harmonic disruptor on the component in a strategic dampening section configured to provide a dampening function for predetermined frequency of vibration being targeted.
